# EUROPÄISCHE PATENTSCHRIFT

(11) **EP 1 917 566 B1**
(45) Veröffentlichungstag und Bekanntmachung des Hinweises auf die Patenterteilung: **29.09.2010**
(21) Anmeldenummer: 06775692.4
(22) Anmeldetag: 11.07.2006
(51) Int. Cl.: G05B 19/418

(54) **FERTIGUNGSSTRASSE UND VERFAHREN ZUR STEUERUNG EINER FERTIGUNGSSTRASSE INSBESONDERE PRESSENSTRASSE**
PRODUCTION LINE AND METHOD FOR CONTROLLING A PRODUCTION LINE, IN PARTICULAR A PRESS LINE
CHAINE DE PRODUCTION ET PROCEDE DE COMMANDE D'UNE CHAINE DE PRODUCTION, EN PARTICULIER D'UN TRAIN DE PRESSES

(30) Priorität: 26.08.2005 DE 102005040762
(43) Veröffentlichungstag der Anmeldung: 07.05.2008
(73) Patentinhaber: Müller Weingarten AG, 88250 Weingarten (DE)
(72) Erfinder: RENN, Werner, 88276 Berg-Weiler (DE); HINDERER, Uwe, 88250 Weingarten (DE)
(74) Vertreter: Otten, Herbert
(86) Internationale Anmeldenummer: PCT/DE2006/001192
(87) Internationale Veröffentlichungsnummer: WO 2007/025493

(56) Entgegenhaltungen:
- EP-A1- 0 573 903
- EP-A1- 0 837 379
- DE-A1- 10 360 566
- US-A- 5 290 386

## Beschreibung

Die Erfindung betrifft eine Fertigungsstraße und ein Verfahren zur Steuerung einer Fertigungsstraße in ihren Arbeitsabläufen gemäß den Oberbegriffen der Ansprüche 1 bzw. 11.

Aus der EP 0 837 379 B1 ist eine hydraulische Transferpresse bekannt, bei welcher eine Koordinierung der Bewegungen von Pressen und Transfers mittels einer sogenannten "virtuellen Leitwelle" erfolgt. Dabei handelt es sich um einen elektronischen Taktgeber, durch welchen die unabhängigen Bewegungen von den Einzelpressen und des Teil-Transfers synchronisiert werden.
Bei Pressenstrassen, speziell bei Pressenstrassen mit einer mechanisch angetriebenen Hauptbearbeitungseinrichtung wie Kopfpresse bzw. Ziehstufe mit Schwungrad und Kupplungs-Brems-Kombination kann die Anwendung dieser in der EP 0837379 B1 beschriebene Steuerungslösung Nachteile aufweisen. Durch die z. B. hohen Presskräfte in der Kopfpresse und der Energieentnahme aus dem Schwungrad, welche einen Drehzahlabfall zur Folge haben kann, sowie durch einen eventuellen Schlupf bei Aus- und Einkupplung können Verzögerungen im Geschwindigkeitsprofil des Stößels, bzw. des Antriebes entstehen. D.h. durch den Umformvorgang kann das Kurbelwinkelfenster, in welchem die Stößelbewegung aus Gründen der Freigängigkeit ablaufen muss, in der Praxis ggf. nicht eingehalten werden. Dies kann dazu führen, dass der Stößel beim Rückhub nach dem Umformvorgang den Fahrweg für den Transfer nicht mehr schnell genug freigeben kann und somit die Gefahr einer Kollision von Transfer mit Stößel, bzw. Oberwerkzeug besteht. Um dies zu vermeiden, muss man die Pressenstrassen mit deutlich geringeren Hubzahlen betreiben, als dies theoretisch möglich ist. Die reduzierten Hubzahlen haben hohe Einbußen in der Ausbringung zur Folge.

Der Erfindung liegt die Aufgabe zugrunde, eine Fertigungsstraße und ein Verfahren zur Abstimmung bzw. Steuerung einer Fertigungsstraße zu entwickeln, bei welcher bzw. welchem betriebsbedingt Abweichungen der Hauptbearbeitungseinrichtungen, insbesondere einer Kopfpresse vom Soll-Betrieb den Betrieb der Fertigungsstraße bzw. den Arbeitsablauf der einzelnen Stationen der Fertigungsstraße nicht behindern bzw. beeinflussen.

Diese Aufgabe wird ausgehend von den Merkmalen des Oberbegriffs des Anspruchs 1 bzw. des Anspruchs 10 durch die kennzeichnenden Merkmale der Ansprüche 1 bzw. 10 gelöst. In den Unteransprüchen sind vorteilhafte und zweckmäßige Weiterbildungen angegeben.

Die erfindungsgemäße Fertigungsstraße umfasst eine Hauptbearbeitungseinrichtung, insbesondere eine Kopfpresse bzw. Ziehpresse, welche Abweichungen vom Soll-Geschwindigkeitsprofil des Stößels bzw. des Antriebs z. B. durch Drehzahlabfall oder Schlupf aufweist und dadurch verantwortlich ist für eine Taktverschleppung. Weiterhin sind die Signale und insbesondere die Sollwerte, welche von einem Leitrechner übertragen werden, durch eine Erfassung wenigstens eines Arbeitszustandes der Hauptbearbeitungseinrichtung generierbar, bzw. ableitbar. Hierdurch ist es möglich, nicht exakt vorhersehbare Verzögerungen des Arbeitsablaufs der Hauptbearbeitungseinrichtung durch den Leitrechner direkt, also schon bei der Erzeugung der Signale/Sollwerte für die anderen Stationen der Fertigungsstraße zu berücksichtigen. Das heißt, die Signale/Sollwerte, welche vom Leitrechner ausgehen, werden von dem erfassten Arbeitszustand bzw. Arbeitsfortschritt der Hauptbearbeitungseinrichtung abgeleitet. Kern der Erfindung ist somit eine Fertigungsstraße mit einem Leitrechner, welcher sich z. B. über einen Leitwellengeber an einer realen Hauptbearbeitungseinrichtung der Fertigungsstraße orientiert. Hierdurch kann das Aussenden von Signalen/Sollwerten, welche sich nachträglich als unzutreffend erweisen, vermieden werden. Mit einer derartigen Fertigungsstraße, bestehend aus einer vorzugsweise konventionell angetriebenen Kopfpresse/Ziehpresse mit Schwungrad und z. B. Folgepressen mit servoelektrischen Antrieben ohne Schwungrad, können Abweichungen der Hauptbearbeitungseinrichtung vom Soll-Betrieb dynamisch in die Regelung der Fertigungsstraße einfließen.

Im Sinne der Erfindung bezeichnet der Begriff "Station" alle Einzelmaschinen der Fertigungsstraße. Hierunter fallen sowohl die Werkstückbearbeitungseinrichtungen als auch die Werkstücktransporteinrichtungen. Die Hauptbearbeitungseinrichtung und die Vorbearbeitungseinrichtungen stellen besondere Ausführungsvarianten einer Werkstückbearbeitungseinrichtung dar.

Wie bereits erwähnt, wirkt sich diese erfindungsgemäße Steuerung dann besonders vorteilhaft aus, wenn die oben beschriebene schwungradgetriebene mechanische Kopfpresse vorzugsweise mit schwungradlosen servo-elektrischen Folgepressen kombiniert wird. Bei den schwungradlosen servoelektrischen Pressen ist der Verschleppungseffekt der Stößelbewegung aufgrund des dynamischen, lagegeregelten Servoantriebes praktisch nicht vorhanden und somit können die Hauptbearbeitungseinrichtungen, die Transfervorrichtungen und die übrigen Umformeinrichtungen exakt der Leitwelle d. h. den Vorgaben des Leitrechners folgen, welche aufgrund eines Arbeitszustandes der Hauptbearbeitungseinrichtung, z. B. Kopfpresse generiert wird.

Die Erfindung sieht vorzugsweise weiterhin vor, jeder Werkstückbearbeitungseinrichtung und/oder jeder Werkstücktransporteinrichtung einen eigenen Stationsrechner zuzuordnen, welcher eine Verbindung zu dem Leitrechner aufweisen können. Hierdurch lassen sich herkömmliche Werkstückbearbeitungseinrichtungen und/oder herkömmliche Werkstücktransportvorrichtungen mit ihren standardmäßig vorhandenen Rechnern mit minimalem Aufwand in die erfindungsgemäße Fertigungsstraße einbinden.

Erfindungsgemäß ist es weiterhin vorgesehen, die Werkstückbeärbeitungseinrichtungen und/oder die Werkstückstransporteinrichtungen direkt über den Leitrechner zu kontrollieren. Eine derartige Zusammenschaltung der Stationen der Fertigungsstraße ermöglicht es durch die zentrale Anordnung der Kontrolleinrichtung, einzelne Komponenten zusammenzufassen oder für mehrere Stationen zu nutzen und führt so zu einer Kosteneinsparung. Weiterhin ist eine Wartung der elektronischen Kontrolleinrichtung für die gesamte Fertigungsstraße an einem zentralen Ort möglich.

Die Erfindung kann gegebenenfalls auch vorsehen, den Stationsrechner der Hauptbearbeitungseinrichtung als Leitrechner auszubilden bzw. mit diesem zusammenzufassen und von diesem die Signale an die Stationsrechner der anderen Werkstückbearbeitungseinrichtungen und/oder der Werkstücktransporteinrichtungen zu übermitteln. Hierdurch erfolgt eine Zusammenfassung von Rechnern an dem Ort, welcher für die Versorgung des Leitrechners mit Daten relevant ist.

Weiterhin sieht die Erfindung vor, der Hauptbearbeitungseinrichtung eine Werkstückbearbeitungseinrichtung in Form einer Vorbearbeitungseinrichtung vorauszuschalten. Bei der Vorbearbeitungseinrichtung kann es sich beispielsweise um eine Platinenzuführeinheit handeln, von welcher Platinen für die Hauptbearbeitungseinrichtung zugeführt werden. Die Versorgung der Vorbearbeitungseinrichtung mit Signalen des Leitrechners ermöglicht eine Aufrechterhaltung der dynamischen, synchronisierten Arbeitsweise der Fertigungsstraße auch vor der Hauptbearbeitungseinrichtung.

Insbesondere sieht die Erfindung vor, die Hauptbearbeitungseinrichtung als erste Station der Fertigungstrasse anzuordnen. Hierdurch wird die Generierung der Signale/Sollwerte vereinfacht, da lediglich ablauftechnisch nachgeordnete Stationen berücksichtigt werden müssen.

Die Erfindung sieht weiterhin vor, als Arbeitszustand der Hauptbearbeitungseinrichtung wenigstens eine Stellung eines Umformwerkzeugs zu erfassen. Beispielsweise wird dieser Arbeitszustand mit einem Geber an der Antriebswelle erfasst. Aber auch eine Erfassung am Schwungrad, den Zahnrädern oder dem Stößel sind denkbar. Hierdurch können exakte Rückschlüsse auf den Fortschritt des Arbeitsablaufs der Hauptbearbeitungseinrichtung gemacht werden, welche für die Verarbeitung im Leitrechner geeignet sind.

Weitere Einzelheiten der Erfindung werden in der Zeichnung anhand von schematisch dargestellten Ausführungsbeisielen beschrieben.

Hierbei zeigen:

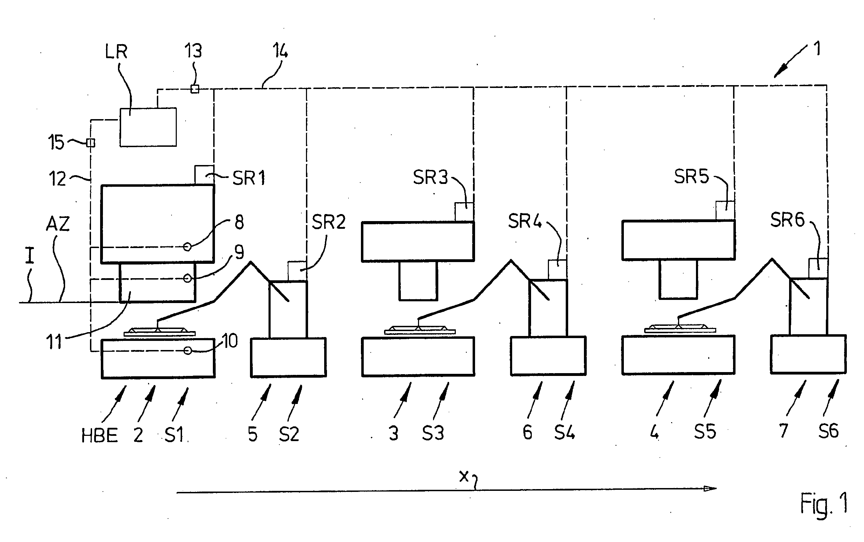

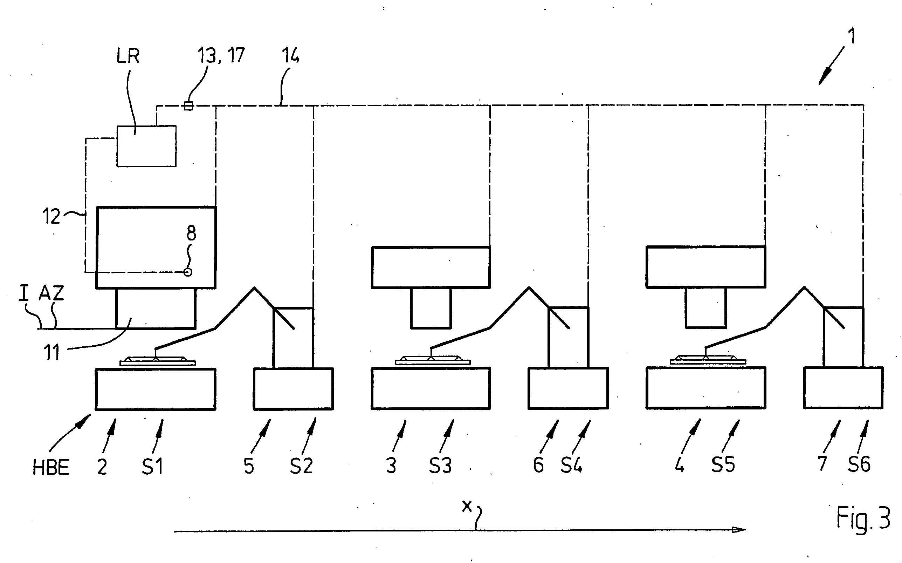

- Figuren 1 und 3:: drei Ausführungsvarianten einer erfindungsgemäßen Fertigungsstraße;

In Figur 1 ist eine erste Ausführungsvariante einer erfindungsgemäßen Fertigungsstraße 1 schematisch dargestellt. Die Fertigung läuft in einer Fertigungsrichtung x ab, wobei die Fertigungsstraße 1 sechs Stationen S1 bis S6 umfasst. Die Stationen S1, S3 und S5 sind als Werkstückbearbeitungseinrichtungen 2, 3, 4 ausgeführt und die Stationen S2, S4 und S6 sind als Werkstücktransporteinrichtungen 5, 6, 7 ausgebildet. Die erste Station S1 bildet eine Hauptbearbeitungseinrichtung HBE, die als Kopfpresse bzw. Ziehpresse ausgeführt ist. Die Hauptbearbeitungseinrichtung HBE weist wenigstens einen Sensor 8 auf, von welchem ein Arbeitszustand AZ erfasst wird. Weitere Sensoren 9, 10 können wahlweise vorgesehen sein. Als Arbeitszustand AZ wird beispielsweise die Stellung I eines Umformwerkzeugs 11 der Hauptbearbeitungseinrichtung HBE verstanden. Insbesondere kann der Geber an der Antriebswelle, am Schwungrad, an Zahnrädern oder am Stößel angeordnet sein. Dieser Arbeitszustand AZ wird von dem Sensor 8 erfasst und an einen Leitrechner LR über eine Sensordatenleitung 12 übermittelt. Auf der Basis dieser Arbeitszustände AZ generiert der Leitrechner LR Signale oder Sollwerte 13, welche über die Signalleitung 14 an die Stationen S1 bis S6 übertragen werden. Die Stationen S1 bis S6 können wahlweise auch eigene Stationsrechner SR1 bis SR6 aufweisen die ggf. anzusteuern sind.

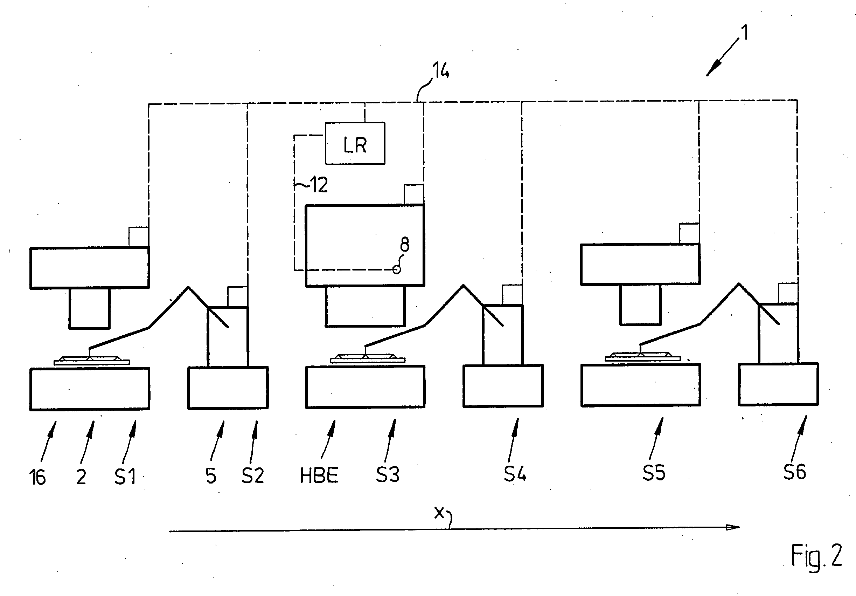

In Figur 2 ist eine zweite Ausführungsvariante einer erfindungsgemäßen Fertigungsstraße 1 schematisch dargestellt. Grundsätzlich kann hier auf die Beschreibung zu der Figur 1 verwiesen werden. Im Unterschied zu der Figur 1 ist eine Hauptbearbeitungseinrichtung HBE als dritte Station S3 ausgeführt. Der Hauptbearbeitungseinrichtung HBE ist als Station S1 eine Werkstückbearbeitungsstation 2, wie z. B. eine Platinenzufuhreinheit vorgeschaltet, welche als Vorbearbeitungsstation 16 ausgeführt ist. Zwischen der Vorbearbeitungsstation 16 und der Hauptbearbeitungseinrichtung HBE ist eine Werkstücktransporteinrichtung 5 angeordnet, welche beispielsweise eine von der Station 1 zugeschnitten Platine an die Station 3 übergibt.

In Figur 3 ist eine dritte Ausführungsvariante einer erfindungsgemäßen Fertigungsstraße 1 schematisch dargestellt. Bezüglich der Anordnung der Stationen kann hier auf die Beschreibung zu der Figur 1 verwiesen werden. Im Unterschied zu der Figur 1 verfügen Stationen S1 bis S6 über keinen eigenen Stationsrechner. Vielmehr werden alle Stationen S1 bis S6 durch einen Leitrechner LR kontrolliert. Signale/Sollwerte 13 des Leitrechners LR beinhalten Steuerbefehle 17, welche von den Stationen direkt umsetzbar sind.

Wie in den Figuren dargestellt, werden der Hauptbearbeitungseinrichtung, die als schwungradgetriebene mechanische Kopfpresse oder Ziehpresse ausgebildet ist, eine Reihe von Nebenbearbeitungseinrichtungen NBE zugeordnet, die vorzugsweise als schwungradlose, servo-elektrische Folgepresse S3, S5 ausgebildet sind. Hierzu wird auf die vorstehenden Ausführungen verwiesen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Fertigungsstraße
- 2, 3, 4: Werkstückbearbeitungseinrichtung, Presse
- 5, 6, 7: Werkstückstransporteinrichtung
- 8, 9, 10: Sensor an HBE
- 11: Umformwerkzeug von HBE
- 12: Sensordatenleitung
- 13: Signale/Sollwerte
- 14: Signalleitung für 13
- 15: Daten von 8, 9, 10
- 16: Vorbearbeitungseinrichtung
- 17: Steuerbefehl
- HBE: Hauptbearbeitungseinrichtung
- NBE: Nebenbearbeitungseinrichtung
- x: Fertigungsrichtung
- I: Stellung von 11
- AZ: Arbeitszustand von HBE
- LR: Leitrechner
- SR1 - SR6: Stationsrechner
- S1 - S6: Station

## Patentansprüche

1. Fertigungsstraße (1)
- mit mehreren mechanisch unabhängig voneinander arbeitenden Werkstückbearbeitungseinrichtungen (2, 3, 4), insbesondere Pressenstraße,
- mit Werkstückstransporteinrichtungen (5, 6, 7), welche die Werkstückbearbeitungseinrichtungen (2, 3, 4) zum Werkstücktransport verknüpfen und
- mit einem Leitrechner (LR) vorzugsweise mit Sollwertvorgabe, welcher durch eine elektronische Übertragung von Signalen (13) und insbesondere von Sollwerten die Werkstückbearbeitungseinrichtungen (2, 3, 4) und/oder die Werkstückstransporteinrichtungen (5, 6, 7) in ihren Arbeitsabläufen abstimmt,
**dadurch gekennzeichnet,**
**dass** die Fertigungsstraße (1) eine Hauptbearbeitungseinrichtung (HBE), insbesondere eine Kopfpresse/Ziehpresse umfasst, welche Abweichungen vom Soll-Geschwindigkeitsprofil des Stößels bzw. des Antriebs oder dergleichen aufweist, und dass die Sollwerte (13), welche vom Leitrechner (LR) übertragen werden, durch eine Erfassung wenigstens eines Arbeitszustandes (AZ) der Hauptbearbeitungseinrichtung (HBE)generiert werden.

2. Fertigungsstraße nach Anspruch 1, **dadurch gekennzeichnet, dass** jede Werkstückbearbeitungseinrichtung (2, 3, 4) und/oder jede Werkstücktransporteinrichtung (5, 6, 7) einen eigenen Stationsrechner (SR1 - SR6) aufweist, welcher mit dem Leitrechner (LR) in Verbindung steht.

3. Fertigungsstraße nach einem der vorhergehenden Ansprüche, **dadurch gekennzeichnet, dass** die Werkstückbearbeitungseinrichtungen (2, 3, 4) und/oder die Werkstückstransporteinrichtungen (5, 6, 7) direkt durch einen Leitrechner (LR) kontrollierbar sind.

4. Fertigungsstraße nach einem der vorhergehenden Ansprüche, **dadurch gekennzeichnet, dass** der Hauptbearbeitungseinrichtung (HBE) eine Werkstückbearbeitungseinrichtung (2) in Form einer Vorbearbeitungseinrichtung (16) wie Platinenzuführeinheit oder dergleichen vorgeschaltet ist.

5. Fertigungsstraße nach einem der vorhergehenden Ansprüche, **dadurch gekennzeichnet, dass** die Signale/Sollwerte (13) in Form von Steuersignalen vom Leitrechner (LR) bereitgestellt werden.

6. Fertigungsstraße nach einem der Ansprüche 1 bis 3, **dadurch gekennzeichnet, dass** die Signale/Sollwerte(13) über ein Bussystem vom Leitrechner (LR) bereitgestellt werden.

7. Fertigungsstraße nach einem der vorhergehenden Ansprüche, **dadurch gekennzeichnet, dass** die Hauptbearbeitungseinrichtung (HBE) als erste Station (S1) der Fertigungstrasse ausgebildet ist.

8. Fertigungsstraße nach einem der vorhergehenden Ansprüche, **dadurch gekennzeichnet, dass** der Arbeitszustand (AZ) der Hauptbearbeitungseinrichtung (HBE) durch eine Stellung (I) eines Umformwerkzeugs (11) erfasst wird.

9. Fertigungsstraße nach Anspruch 8, **dadurch gekennzeichnet, dass** der Arbeitszustand der Hauptbearbeitungseinrichtung (HBE) mittels eines Gebers an der Antriebswelle und/oder am Schwungrad und/oder an Zahnrädern und/oder am Stößel der Umformmaschine erfolgt.

10. Fertigungsstraße nach einem der vorhergehenden Ansprüche, **dadurch gekennzeichnet, dass** einer schwungradgetriebenen mechanischen Kopfpresse/Ziehpresse als Hauptbearbeitungseinrichtung (HBE) schwungradlose, servo-elektrische Folgepressen als Nebenbearbeitungseinrichtungen (NBE) nach- oder vorgeschaltet sind.

11. Verfahren speziell zur Abstimmung einer Fertigungsstraße (1) nach einem der Ansprüche 1 - 10 eingerichtet, **dadurch gekennzeichnet, dass** die Signale/Sollwerte (13), welche von einem Leitrechner (LR) übertagen werden, durch eine Erfassung eines Arbeitszustandes (AZ) der Hauptbearbeitungseinrichtung (HBE) vorzugsweise über einen Leitwellengeber generiert werden.

## Claims

1. Production line (1)
- comprising several workpiece processing devices (2, 3, 4) operating mechanically independently of one another, in particular a press line,
- workpiece transport devices (5, 6,7) which connect the workpiece processing devices (2, 3, 4) in order to transport the workpieces and
- a main computer (LR) preferably with a setpoint selection, which by means of the electronic transmission of signals (13) and in particular setpoint values adjusts the workpiece processing devices (2, 3, 4) and or the workpiece transport devices (5, 6, 7) in their work sequences,
**characterised in that**
the production line (1) comprises a main processing device (HBE), in particular a head press, draw press, which comprises deviations from the intended speed profile of the ram or the drive or the like, and **in that** the setpoint values (13), which are transferred from the master computer (LR), are generated by determining at least one operating state (AZ) of the main processing device (HBE).

2. Production line according to claim 1, **characterised in that** each workpiece processing device (2, 3, 4) and/or each workpiece transport device (5, 6,7) has its own station computer (SR1 - SR6), which is in connection with the main computer (LR).

3. Production line according to one of the preceding claims, **characterised in that** the workpiece processing devices (2, 3, 4) and/or the workpiece transport devices (5, 6, 7) can be controlled directly by a main computer (LR).

4. Production line according to one of the preceding claims, **characterised in that** a workpiece processing device (2) in the form of a pre-processing device (16) such as a plate feeding unit or the like is connected upstream of the main processing device (HBE).

5. Production line according to one of the preceding claims, **characterised in that** the signals/setpoint values (13) are provided in the form of control signals by the main computer (LR).

6. Production line according to one of claims 1 to 3, **characterised in that** the signals/setpoint values (13) are provided via a bus system by the main computer (LR).

7. Production line according to one of the preceding claims, **characterised in that** the main processing device (HBE) is designed as a first station (S1) of the production line.

8. Production line according to one of the preceding claims, **characterised in that** the operating status (AZ) of the main processing device (HBE) is determined by a position (I) of a shaping tool (11).

9. Production line according to claim 8, **characterised in that** the operating status of the main processing device (HBE) is determined by means of a detector on the drive shaft and/or on the flywheel and/or on gear wheels and/or on the ram of the shaping machine.

10. Production line according to one of the preceding claims, **characterised in that** flywheel-less, servo-electric following presses as secondary processing devices (HBE) are connected upstream or downstream of a flywheel-driven mechanical head press/drawing press as a main processing device (HBE).

11. Method especially for determining a production line (1) according to one of claims 1 to 10, **characterised in that** the signals/setpoint values (13) which are transmitted by a main computer (LR) are generated by detecting the operating status (AZ) of the main processing device (HBE) preferably by means of a guiding shaft detector.

## Revendications

1. Ligne de production (1) comprenant :
- plusieurs installations d'usinage (2, 3, 4) travaillant mécaniquement de manière indépendante les unes des autres, notamment train de presses,
- des installations de transport de pièces (5, 6, 7) reliant les installations d'usinage de pièces (2, 3, 4) pour le transport des pièces, et
- un calculateur pilote (LR) avec de préférence des valeurs de consigne qui accordent par une transmission électronique de signaux (13) et notamment de valeurs de consigne, les installations d'usinage de pièces (2, 3, 4) et/ou les installations de transport de pièces (5, 6, 7) dans le déroulement des opérations,
**caractérisée en ce que**
la ligne de fabrication (1) comprend une installation principale d'usinage (HBE), notamment une presse de tète/presse d'étirage qui présente des écarts par rapport au profil de vitesse de consigne du poussoir ou de l'entraînement ou moyens analogues, et
les valeurs de consigne (13) transmises par le calculateur pilote (LR) sont générées par la saisie d'au moins un état de travail (AZ) de l'installation principale d'usinage (HBE).

2. Ligne de production selon la revendication 1,
**caractérisée en ce que**
chaque installation d'usinage de pièces (2, 3, 4) et/ou chaque installation de transport de pièces (5, 6, 7) comporte son propre calculateur de poste (SR1 - SR6) relié au calculateur pilote (LR).

3. Ligne de production selon l'une des revendications précédentes,
**caractérisée en ce que**
les installations d'usinage de pièces (2, 3, 4) et/ou les installations de transport de pièces (5, 6, 7), sont contrôlées directement par un calculateur pilote (LR).

4. Ligne de production selon l'une des revendications précédentes,
**caractérisée en ce que**
l'installation principale d'usinage (HBE) est précédée d'une installation d'usinage de pièces (2) sous la forme d'une installation de préusinage (16) telle qu'une unité d'alimentation de platines ou analogue.

5. Ligne de production selon l'une des revendications précédentes,
**caractérisée en ce que**
les signaux/valeurs de consigne (13) sont fournis sous la forme de signaux de commande par le calculateur pilote (LR).

6. Ligne de production selon l'une des revendications 1 à 3,
**caractérisée en ce que**
les signaux/valeurs de consigne (13) sont fournis par le calculateur pilote (LR) par l'intermédiaire d'un système de bus.

7. Ligne de production selon l'une des revendications précédentes,
**caractérisée en ce que**
l'installation principale d'usinage (HBE) est réalisée comme premier poste (S1) de la ligne de production.

8. Ligne de production selon l'une des revendications précédentes,
**caractérisée en ce que**
l'état de travail (AZ) de l'installation principale d'usinage (HBE) est saisi par une position (I) d'un outil de formage (11).

9. Ligne de production selon la revendication 8,
**caractérisée en ce que**
l'état de travail de l'installation principale d'usinage (HBE) est fourni par un capteur installé sur l'arbre moteur et/ou sur le volant d'inertie et/ou des pignons et/ou sur le poussoir de la machine de formage.

10. Ligne de production selon l'une des revendications précédentes,
**caractérisée en ce que**
l'installation principale d'usinage (HBE) réalisée sous la forme d'une presse de tête/presse d'étirage mécanique entraînée par un volant d'inertie, est suivie ou précédée d'une presse multiple servoélectrique constituant des installations d'usinage accessoires (NBE).

11. Procédé spécial pour accorder une ligne de production (1) selon l'une des revendications 1 à 10,
**caractérisée en ce que**
les signaux/valeurs de consigne (13) transmis par un calculateur pilote (LR) sont générés par une saisie d'un état de travail (AZ) de l'installation principale d'usinage (HBE) de préférence par l'intermédiaire d'un générateur d'onde pilote.
